# EUROPÄISCHE PATENTSCHRIFT

(11) **EP 1 531 709 B1**
(45) Veröffentlichungstag und Bekanntmachung des Hinweises auf die Patenterteilung: **06.06.2007**
(21) Anmeldenummer: 03794966.6
(22) Anmeldetag: 28.08.2003
(51) Int. Cl.: A47J 31/60

(54) **ABGABEVORRICHTUNG FÜR GETRÄNKE**
DISPENSING DEVICE FOR DRINKS
DISPOSITIF DE DISTRIBUTION DE BOISSONS

(30) Priorität: 28.08.2002 DE 10239594
(43) Veröffentlichungstag der Anmeldung: 25.05.2005
(73) Patentinhaber: NIRO-PLAN AG, 4663 Aarburg (CH)
(72) Erfinder: GREIWE, Hansdieter, 97944 Boxberg (DE)
(74) Vertreter: Blumenröhr, Dietrich
(86) Internationale Anmeldenummer: PCT/EP2003/009559
(87) Internationale Veröffentlichungsnummer: WO 2004/023950

(56) Entgegenhaltungen:
- GB-A- 2 031 378
- US-A- 4 098 175
- US-A- 4 465 210

## Beschreibung

Die Erfindung betrifft eine Abgabevorrichtung für Getränke oder dergleichen dosierbare fluide Lebensmittel, insbesondere für Kaffee und/oder Milch oder dergleichen Heißgetränke.

Abgabevorrichtungen dieser Art sind in vielfältiger Form bekannt. Sie werden nicht nur in Selbstbedienungsgaststätten und Kantinen verwendet, sondern auch in der normalen Hotellerie, wodurch Servicepersonal hinter der Theke eingespart wird.

Um einerseits mehrere verschiedene Getränke oder auch Mischgetränke abgeben zu können und andererseits nicht eine Vielzahl von "spezialisierten" Abgabevorrichtungen zu benötigen, werden die Abgabevorrichtungen umschaltbar ausgeführt. Hierbei ergibt sich eine Vielzahl von Problemen, die insbesondere durch die verschiedenen notwendigen Ventileinrichtungen ausgelöst werden. Zum einen ergeben sich nämlich lange Leitungswege, was insbesondere bei Abgabe von Heißgetränken dann nachteilig ist, wenn die Abgabevorrichtung nicht ständig, sondern in Intervallen benützt wird, so daß Abkühlungseffekte bemerkbar werden. Zum anderen ergeben sich erhebliche Hygieneprobleme, welche aufwendige, manuell durchzuführende Reinigungsarbeiten erfordern, die in einem Schichtbetrieb zu erheblichen Belästigungen führen

Eine Abgabevorrichtung nach dem Oberbegriff des unabhängigen Anspruchs 1 ist aus GB-A-2031378 bekannt.

Der Erfindung liegt die Aufgabe zugrunde, eine Abgabevorrichtung dahingehend aufzuzeigen, daß in einfacher und wenig aufwendiger Weise ein korrekter Betrieb der Abgabevorrichtung ermöglicht wird.

Diese Aufgabe wird durch eine Abgabevorrichtung nach dem unabhängigen Anspruch 1 gelöst.

Ein wesentlicher Punkt der Erfindung liegt darin, daß selbsttätig, also ohne das manuelle Unterstellen von Spülwasserauffangbehältern oder das Anschließen von Spülwasserleitungen die Wege, in welchen die Heißgetränke gefördert werden und die nach einem Abgabevorgang leerlaufen, gespült werden können. Dadurch kann nicht nur in hygienischer Hinsicht ein Optimum erzielt werden, es können vielmehr auch die Kanäle, in denen die Heißgetränke laufen, vor einer Abgabe des Getränkes aufgewärmt werden. Auf diese Weise sind eine optimale Bedienbarkeit der Abgabevorrichtung insbesondere auch vonseiten des Betreibers sowie eine optimale Qualität der Getränke für den Kunden sicherstellbar.

Durch die Schiebeceinrichtung, die vorzugsweise in Form von drehbaren Bahnscheiben ausgebildet ist, wird die Anzahl und Größe von "Totstellen", die einem durch Spülen unzugänglich sind, vermindert. Darüber hinaus ist eine besonders hohe Variabilität der Zu- und Abflußleitungen möglich, so daß eine Vielzahl von Zuführeinrichtungen mit einer Vielzahl von Fülleinrichtungen in variablen Kombinationen verbindbar ist.

Die Fülleinrichtungen sind vorzugsweise direkt am Schieber anschließend angebracht, so daß extrem kurze Wege zwischen den durch die Schieber gebildeten Ventile und der Fülleinrichtung sichergestellt sind. Dies wiederum optimiert die hygienischen und qualitativen Eigenschaften der Abfülleinrichtung.

Vorzugsweise sind zwei oder mehr Schieber vorgesehen und mit Kanälen derart versehen, daß zwei oder mehr Heißgetränke wahlweise gleichzeitig oder nacheinander derselben Fülleinrichtung zuführbar sind, was die Variabilität beim Einsatz der Abfülleinrichtung erhöht.

Die Fülleinrichtungen sind vorzugsweise mit mindestens zwei derart getrennten Strömungskanälen versehen, daß die durch die getrennten Strömungskanäle fließenden Heißgetränke erst nach Verlassen der Fülleinrichtungen, also im wesentlichen erst im Geschirr vermischt werden. Dadurch ist es möglich, eine optimale Getränkekonsistenz, z. B. bei Cappuccino oder Latte Macchiato sicherzustellen.

Die Kanäle sind vorzugsweise derart miteinander verbunden, daß mehrere Kanäle gleichzeitig von Zusatzfluid durchströmbar sind. Man kann also mit einem einzigen Spül- (oder Vorwärm-)vorgang mehrere Kanäle gleichzeitig spülen, was zu einer Kostenminimierung bzw. auch Arbeitsgeschwindigkeitssteigerung führt.

Vorzugsweise ist eine einzige Zusatzleitung zum Abführen von Zusatzfluid vorgesehen, wobei das Zusatzfluid durch die Getränkeleitungen zuführbar und die Getränkeleitungen in Strömungsrichtung direkt vor Einströmöffnungen für das Zusatzfluid absperrbar sind. Man kann also entweder die Zuführung des Zusatzfluids direkt am Schieber vornehmen, oder aber - wie hier angedeutet - stromauf dieser Ventileinrichtungen im wesentlichen direkt nach dem Punkt der Zuführeinrichtungen, an denen deren erstes Abgabeventil liegt. Damit ist eine optimale Reinigung der gesamten, für Lebensmittel benützten Leitungen möglich.

Vorzugsweise sind Steuereinrichtungen vorgesehen und derart ausgebildet, daß nach einem (jeden) Getränkeabgabevorgang ein Spülvorgang durchgeführt wird. Dadurch ist die maximale Hygiene sichergestellt.

Bevorzugte Ausführungsformen der Erfindung ergeben sich aus den Unteransprüchen und der nachfolgenden Beschreibung eines Ausführungsbeispiels, das anhand von Abbildungen näher erläutert wird. Hierbei zeigen
- Figur 1 eine Seitenansicht eines Teils einer Abgabevorrichtung in teilgeschnittener Seitenansicht,
- Figur 2 eine Ansicht entlang der Linie II-II aus Figur 1,
- Figur 3 eine Ansicht entlang der Linie III-III aus Figur 1,
- Figur 4 eine perspektivische Darstellung der Anordnung nach den Figuren 1 bis 3,
- Figur 5 eine Frontansicht mit angedeuteter Führung der Kanäle für "Kaffeeausgabe doppelt",
- Figur 6 eine Ansicht entsprechend Figur 5 "Kaffeeausgabe einzeln",
- Figur 7 eine Ansicht entsprechend Figur 5 "Spülung Kaffeeseite",
- Figur 8 eine Ansicht entsprechend Figur 5 "Milchausgabe doppelt",
- Figur 9 eine Ansicht entsprechend Figur 5 "Milchausgabe einzeln",
- Figur 10 eine Ansicht entsprechend Figur 5 "Spülung Milchseite",
- Figur 11 eine Ansicht entsprechend Figur 5 "Kaffeeausgabe doppelt (eine Tasse)" ,
- Figur 12 eine Ansicht entsprechend Figur 5 "Kaffeeausgabe einzeln (eine Tasse)",
- Figur 13 eine Ansicht entsprechend Figur 5 "Spülung Kaffeeseite",
- Figur 14 eine Ansicht entsprechend Figur 5 "Milchausgabe doppelt",
- Figur 15 eine Ansicht entsprechend Figur 5 "Milchausgabe einzeln",
- Figur 16 eine Ansicht entsprechend Figur 5 "Spülung Milchseite",
- Figur 17 eine perspektivische Darstellung mit angedeuteten Kanälen "Ausgabe Kaffee doppelt",
- Figur 18 eine Ansicht entsprechend Figur 5 "Ausgabe Kaffee doppelt",
- Figur 19 eine Schnittansicht der Anordnung nach Figur 18 entlang der Linie XIX-XIX aus Figur 18,
- Figur 20 eine schematisierte Seitenansicht ähnlich Figur 19 zur Darstellung der Kanäle,
- Figur 21 eine perspektivische Darstellung entsprechend Figur 17 "Ausgabe Milch doppelt",
- Figur 22 eine Darstellung entsprechend Figur 18 zur Funktion gemäß Figur 21,
- Figur 23 eine Schnittdarstellung entlang der Linie XXIII-XXIII aus Figur 22,
- Figur 24 eine Darstellung entsprechend Figur 20 der Anordnung nach Figur 21,
- Figur 25 eine Darstellung entsprechend Figur 17 "Ausgabe Kaffee einzeln",
- Figur 26 eine Darstellung entsprechend Figur 18 der Anordnung nach Figur 25,
- Figur 27 eine Schnittdarstellung entlang der Linie XXVII-XXVII aus Figur 26,
- Figur 28 eine Darstellung entsprechend Figur 20 der Anordnung nach Figur 25,
- Figur 29 eine Darstellung entsprechend Figur 17 "Ausgabe Milch einzeln",
- Figur 30 eine Darstellung entsprechend Figur 18 der Anordnung nach Figur 29,
- Figur 31 ein Schnitt entlang der Linie XXXI-XXXI aus Figur 30,
- Figur 32 eine Darstellung entsprechend Figur 20 der Anordnung nach Figur 29,
- Figur 33 eine Darstellung entsprechend Figur 17 "Spülung Kaffeeseite",
- Figur 34 eine Darstellung entsprechend Figur 18 der Anordnung nach Figur 33,
- Figur 35 einen Schnitt entlang der Linie XXXV-XXXV aus Figur 34,
- Figur 36 eine Darstellung entsprechend Figur 20 der Anordnung nach Figur 33,
- Figur 37 eine Darstellung entsprechend Figur 17 in der Funktion "Spülung Milchseite",
- Figur 38 eine Darstellung entsprechend Figur 18 der Anordnung nach Figur 37,
- Figur 39 einen Schnitt entlang der Linie XXXIX-XXXIX aus Figur 38,
- Figur 40 eine Darstellung entsprechend der Figur 20 der Anordnung nach Figur 37,
- Figur 41 eine Darstellung entsprechend Figur 18 zur Funktion "gleichzeitige Ausgabe von Milch und Kaffee" und
- Figur 42 eine Darstellung entsprechend Figur 20 der Anordnung nach Figur 41.

In der nachfolgenden Beschreibung werden für gleiche und gleichwirkende Teil dieselben Bezugsziffern verwendet.

Weiterhin sei angemerkt, daß das hier gezeigte Beispiel eine Kaffeemaschine zum Abgeben von Kaffee/Espresso und Milch zeigt. Es ist für den Fachmann leicht ersichtlich, daß der hier gezeigte prinzipielle Aufbau in vielfältiger Weise abgeändert werden kann und zwar insbesondere zur Abgabe einer größeren Vielfalt von "Getränken" oder aber anderen fluiden Lebensmitteln. Wenn also im folgenden immer von "Kaffee" und "Milch" gesprochen wird, so ist dies keine Einschränkung der Erfindung auf diese Getränkearten. Unter Kaffee sollte hier auch insbesondere Espresso verstanden werden, der zusammen mit Milch und ggf. einer Aufschäumvorrichtung als Espresso oder Latte Macchiato weiterverarbeitet werden kann.

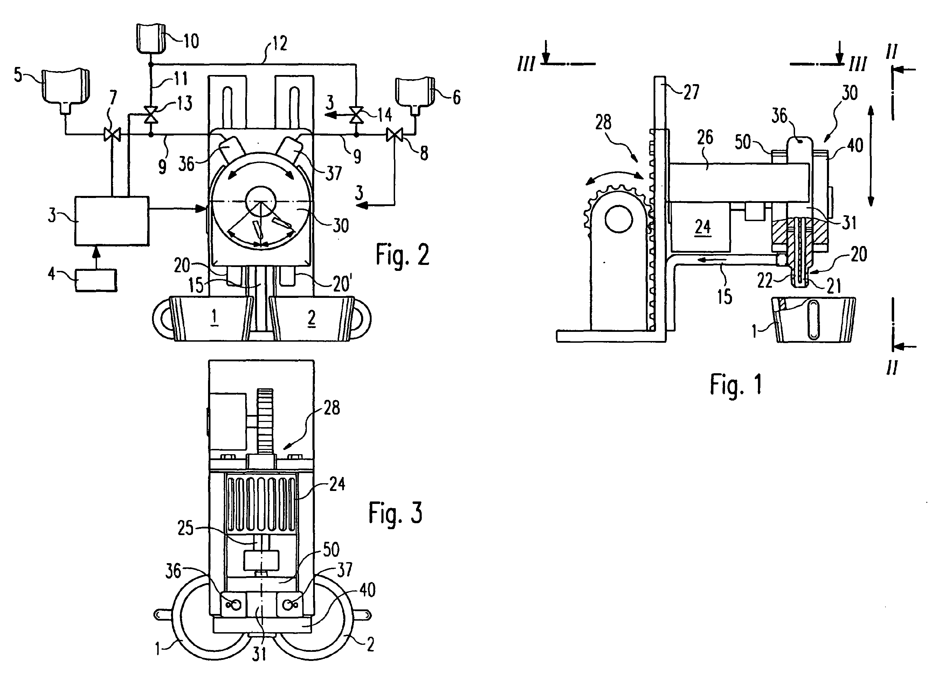

In Figur 1 ist ein Hauptelement einer Abgabevorrichtung in einer (teilgeschnittenen) Seitenansicht gezeigt, die in den Figuren 2 in einer Vorderansicht zusammen mit Steuerungselementen und in Figur 3 in der Draufsicht nochmals abgebildet ist.

Gemäß den Figuren 1 bis 3 umfaßt die Abgabevorrichtung ein ortsfestes Gestell 27, an welchem über einen Ventilhalter 26 eine Ventileinrichtung 30 befestigt ist, welche einen am Ventilhalter 26 festen Auslaufblock 31 und auf einer ersten Seite von diesem montierte erste Bahnscheibe 40 und einer zweiten Seite von diesem montierte zweite Bahnscheibe 50 aufweist. Am Auslaufblock 31 sind Fülleinrichtungen 20, 20' angebracht, unter welchen Geschirr 1, 2 gestellt werden kann. Jede der Fülleinrichtungen 20, 20' weist einen ersten Strömungskanal 21 und einen zweiten Strömungskanal 22 auf, die jeweils mit Kanälen im Auslaufblock 31 verbunden sind und sich erst am Ende der Fülleinrichtung 20, 20', also kurz über dem Geschirr 1, 2 vereinen.

Die beiden Bahnscheiben 40, 50 sind auf der Welle 25 über einen Motor 24 gemeinsam drehbar.

Die gesamte, am Ventilhalter 26 befestigte Anordnung kann über einen Hubantrieb 28 nach oben und unten derart verstellt werden, daß die Fülleinrichtungen 20, 20' in eine zur spritzerfreien und eine optimale Vermischung/Einfüllung gewährleistenden Funktion bei der Getränkeabgabe eingestellt werden können.

Am Auslaufblock 31 befinden sich ein erster Zulauf 36 und ein zweiter Zulauf 37, die über Getränkeleitungen 9 und Ventile 7, 8 mit einer ersten Zuführeinrichtung 5 (in diesem Fall für Espresso oder Kaffee) und einer zweiten Zuführeinrichtung 6 (in diesem Fall für Milch) verbunden sind. In die Getränkeleitungen 9 münden eine erste Zusatzleitung 11 und eine zweite Zusatzleitung 12 über ein erstes Zusatzventil 13 bzw. ein zweites Zusatzventil 14, zur Zuführung eines Zusatzfluids aus einer Zusatzfluidzufuhr 10, die Wasser, Dampf, Spülmittel oder eine Mischung hiervon liefert. Die Ventile 7, 8, 13, 14 sowie der Motor 24 zur Einstellung der Ventileinrichtung 30 werden von einer Steuerung 3 gesteuert, die über eine Tastatur 4 bedienbar ist. Die Steuerung 3 enthält Steuerungsprogramme zur Einstellung der Ventile bzw. der Ventileinrichtung 30 mit deren Bahnscheiben 40 und 50, die in programmierbaren Speichern oder auch in fest programmierten Speichern abgelegt sind, wobei letztere beim Hersteller der Abgabevorrichtung programmiert werden. Die Programme sind derart gestaltet, daß bei Eingabe eines Getränkewunsches über die Tastatur 4 die Ventile bzw. Ventileinrichtung dem Getränk entsprechend verstellt und die gewünschten Getränke über eine bestimmte Zeitdauer hinweg zur Abgabe einer vorbestimmten Menge die Leitungen durchströmen.

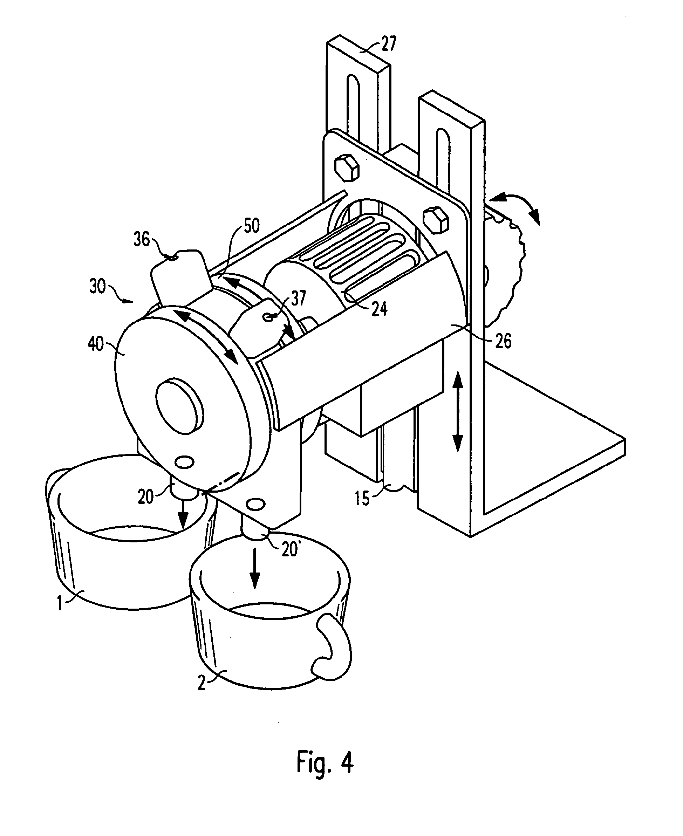

Weiterhin ist an den Auslaufblock 31 eine Abführleitung 15 angeschlossen, welche mit einem Abwasserkanal verbunden ist, so daß Zusatzfluid (z. B. ein Spülmittel) die hier gezeigten und beschriebenen Leitungen und Kanäle durchfließend abgeführt werden kann, ohne dabei die Fülleinrichtungen 20, 20' zu benutzen. Dieser soeben beschriebene Grundaufbau ist in einer perspektivischen Ansicht nochmals in Figur 4 gezeigt.

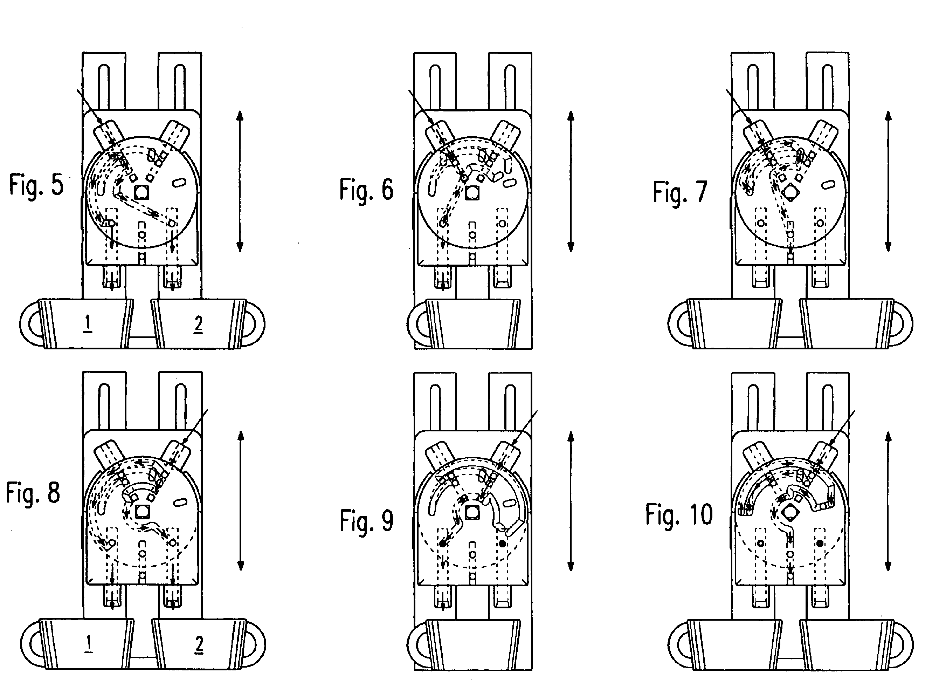

Nachfolgend wird die Funktion der Ventileinrichtungen 30 bei Abgabe- und Reinigungszyklen für die bei den hier beschriebenen Getränkearten Kaffee und Milch anhand der Figuren 5 bis 16 in einer Zusammenfassung beschrieben und weiter unten im Detail erläutert. In den Figuren 5 bis 7 bzw. 11 bis 13 sind diejenigen Kanäle, die in der ersten Bahnscheibe 40 angeordnet und mit dem ersten Zulauf 36 verbindbar sind, und in den Figuren 8 bis 10 bzw. 14 bis 16 die in der zweiten Bahnscheibe 50 angebrachten Kanäle, die mit dem zweiten Zulauf 37 verbindbar sind, jeweils mit unterbrochenen Linien gezeigt. Kanäle, die im Auslaufblock 31 vorgesehen sind, erscheinen in allen Figuren 5 bis 16 (mit durchgezogenen Linien).

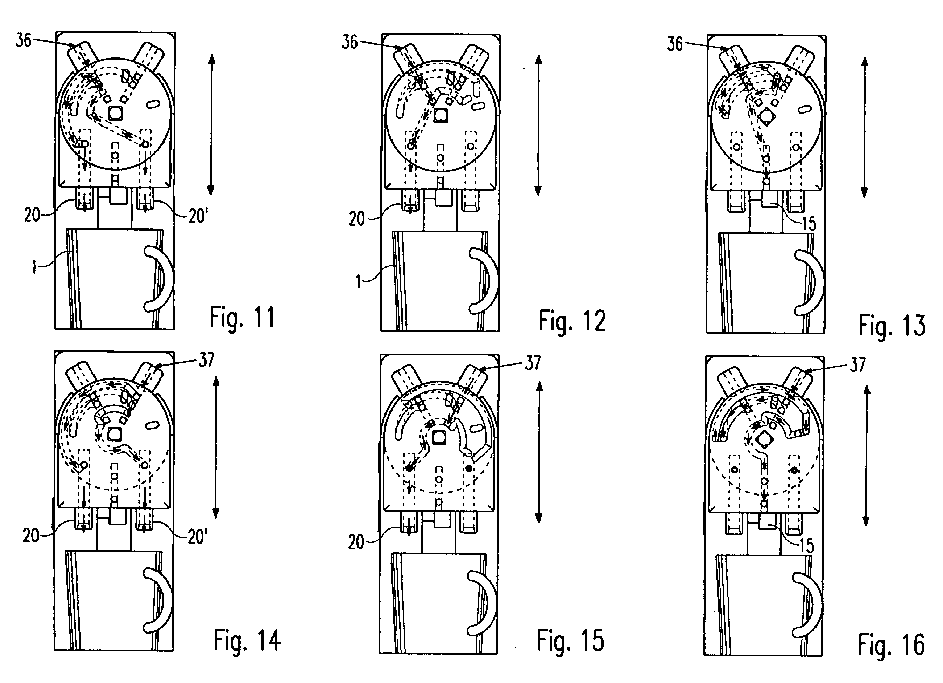

Figur 5 bzw. 11 zeigt eine Ausgabe "Kaffee doppelt" bei welcher Kaffee in den ersten Zulauf 36 einströmt und durch die beiden Fülleinrichtungen 20, 20' in ein Geschirr 1, 2 gefüllt wird.

In Figur 6 bzw. 12 ist der Fall gezeichnet, bei welchem Kaffee in den ersten Zulauf 36 und aus nur einer Fülleinrichtung 20 in das Geschirr 1 fließt.

In Figur 7 bzw. 13 ist der Fall gezeigt, in welchem anstelle von Kaffee Heißwasser/Spülmittel (bei geschlossenem Ventil 7 und geöffnetem Ventil 13) in den ersten Zulauf 36 und danach die in den Figuren 11 und 12 noch von Kaffee durchströmten Kanäle durchfließend in die Abführleitung 15 abgeführt wird.

In den Figuren 8, 9 und 10 bzw. 14, 15 und 16 sind die Abgabe von Milch, welche in den zweiten Zulauf 37 einströmt, in entsprechender Weise über eine Fülleinrichtung 20 bzw. zwei Fülleinrichtungen 20, 20' sowie das Spülen der zuvor von Milch durchströmten Kanäle durch ein Spülmittel gezeigt, das (bei geschlossenem Ventil 8 und geöffnetem Ventil 14) dem zweiten Zulauf 37 zugeführt und durch die Abführleitung 15 abgeführt wird.

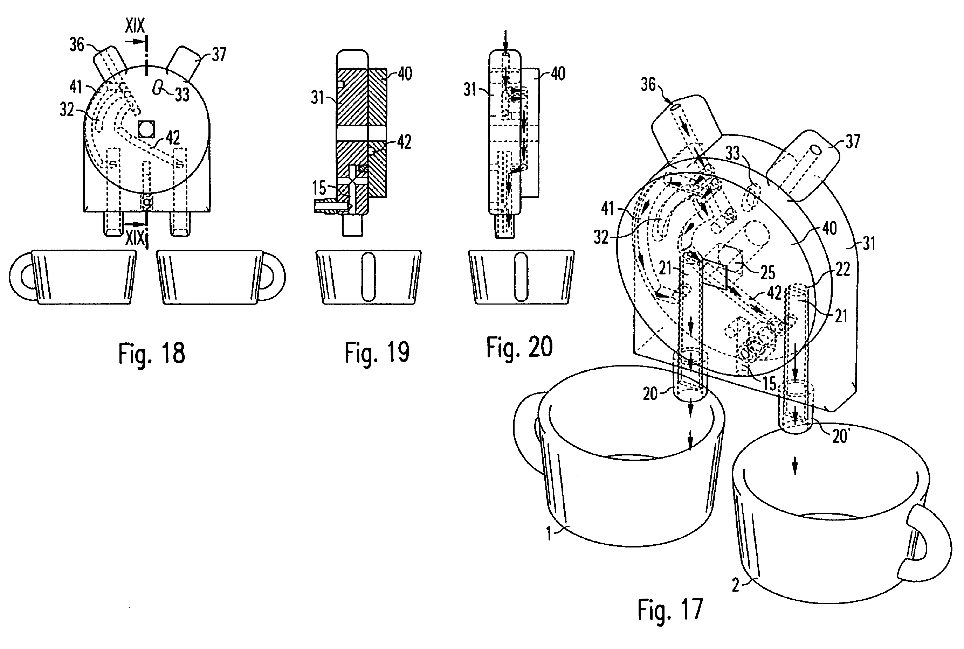

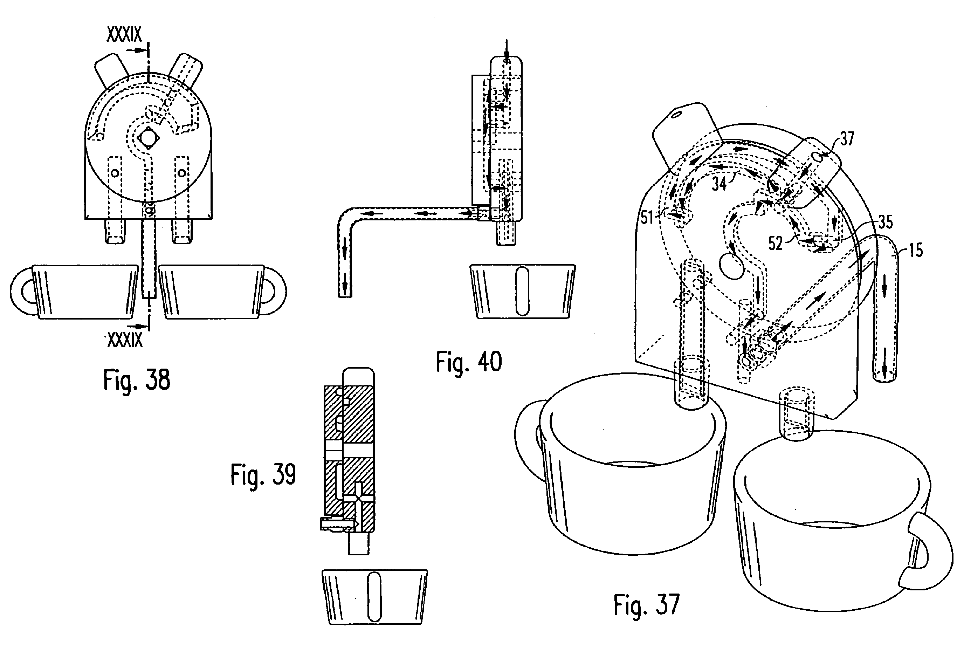

Nachfolgend wird anhand der Figuren 17 bis 20 die in Figur 11 angedeutete Funktion "Kaffee doppelt" näher erläutert. Hierbei sei darauf hingewiesen, daß in den Figuren 17 bis 40 immer nur der Auslaufblock 31 und eine der Bahnscheiben 40 oder 50 gezeigt sind, je nachdem, welche für die gerade beschriebene Funktion notwendig ist.

Gemäß Figuren 17 bis 20 ist auf einer Stirnseite des Auslaufblocks 31 dicht aufliegend die erste Bahnscheibe 40 angeordnet, welche über die Welle 25 vom Motor 24 drehbar ist. Auf der der ersten Bahnscheibe 40 zugewandten Stirnseite sind zur ersten Bahnscheibe 40 hin offene Kanäle 32 (erster Kanal) und 33 (zweiter Kanal) angebracht. In der dem Auslaufblock 31 zugewandten Stirnseite der ersten Bahnscheibe 40 sind ein erster Kanal 41 und ein zweiter Kanal 42 eingebracht. Der im Auslaufblock 31 angebrachte erste Zulauf 36 ist über Bohrungen zu der der ersten Bahnscheibe 40 zugewandten Stirnseite des Auslaufblocks 31 hin geöffnet.

Die im Auslaufblock 31 angebrachten Fülleinrichtungen 20, 20' bzw. deren erste Strömungskanäle 21 stehen über Bohrungen ebenfalls mit der der ersten Bahnscheibe 40 zugewandten Stirnseite des Auslaufblocks 31 in Verbindung.

Die ebenfalls im Auslaufblock 31 angeordnete Abführleitung 15 steht über Bohrungen (die in Figur 19 besonders deutlich gezeigt sind) mit beiden Stirnflächen des Auslaufblocks 31 in Verbindung.

In der in den Figuren 17 bis 20 gezeigten Funktionsstellung "Kaffee doppelt" strömt Kaffee durch den ersten Zulauf 36 und die im Auslaufblock 31 vorgesehenen Bohrungen zur Stirnfläche des Auslaufblocks 31 und entsprechend der in den Figuren gezeigten Drehstellung der ersten Bahnscheibe 40 in den ersten Kanal 41 sowie parallel dazu in den zweiten Kanal 42 in der ersten Bahnscheibe 40. Von diesen Kanälen strömt der Kaffee weiter in die ersten Strömungskanäle 21 der Fülleinrichtungen 20, 20' und in die darunter gestellten Tassen 1, 2. Diese Funktion entspricht also der nach Figur 11.

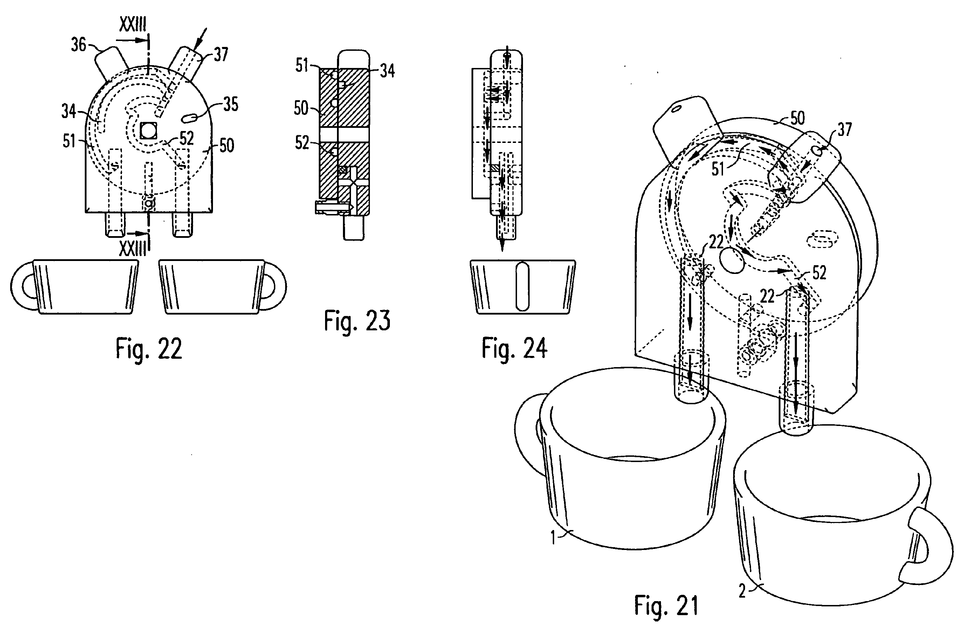

In den Figuren 21 bis 24 ist die analoge Funktion "Milch doppelt" gezeigt, in welcher Milch in die beiden Tassen 1, 2 eingefüllt wird. Zu diesem Zweck weist die der ersten Bahnscheibe 40 gegenüberliegend auf der anderen Stirnfläche des Auslaufblocks 31 dicht sitzende zweite Bahnscheibe 50 einen ersten Kanal 51 und einen zweiten Kanal 52 auf, die zur Stirnseite des Auslaufblocks 31 hin offen sind. Im Auslaufblock 31 wiederum sind zur zweiten Bahnscheibe 50 hin offene Kanäle 34 (dritter Kanal) und 35 (vierter Kanal) vorgesehen, wobei der dritte Kanal 34 an seinem Ende mit dem zweiten Zulauf 37 in Strömungsverbindung steht.

Die im Auslaufblock 31 angebrachten zweiten Strömungskanäle 22 der Fülleinrichtungen 20, 20' sind über Bohrungen zu der Stirnseite des Auslaufblocks 31 hin offen, auf welcher die zweite Bahnscheibe 50 aufliegt.
Bei der in den Figuren 21 bis 24 gezeigten Funktionsstellung "Milch doppelt" gelangt Milch durch den zweiten Zulauf 37, die Kanäle 51 und 52 (parallel) und die zweiten Strömungskanäle 22 in die Tassen 1, 2. Diese Funktionsstellung entspricht also der Figur 14.

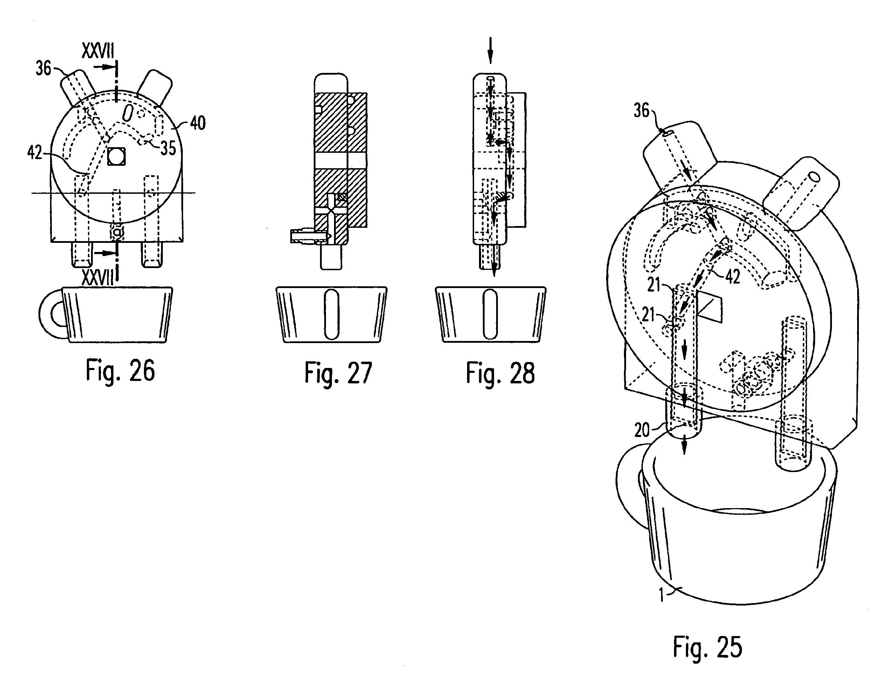

Bei der in Figur 25 bis 28 gezeigten Funktionsstellung "Kaffee einzeln", welche der Figur 12 entspricht, fließt Kaffee vom ersten Zulauf 36 über einen Teilabschnitt des zweiten Kanals 42 der ersten Bahnscheibe 40 zum ersten Strömungskanal 21 der Fülleinrichtung 20 und in die darunter gestellte Tasse 1.

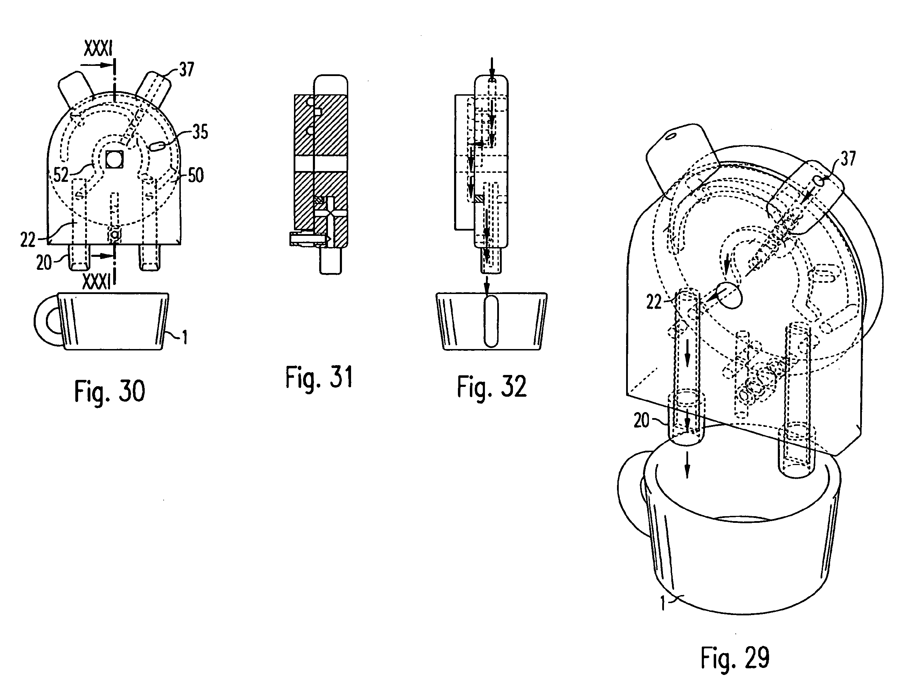

Bei der analogen Funktionsstellung gemäß Figur 29 bis 32 entsprechend Figur 15, also der Funktionsstellung "Milch einzeln", bei welcher Milch durch den zweiten Zulauf 37, einen Teilabschnitt des zweiten Kanals 52 in der zweiten Bahnscheibe 50 und den zweiten Strömungskanal 22 der Fülleinrichtung 20 in die Tasse 1 gefüllt wird.

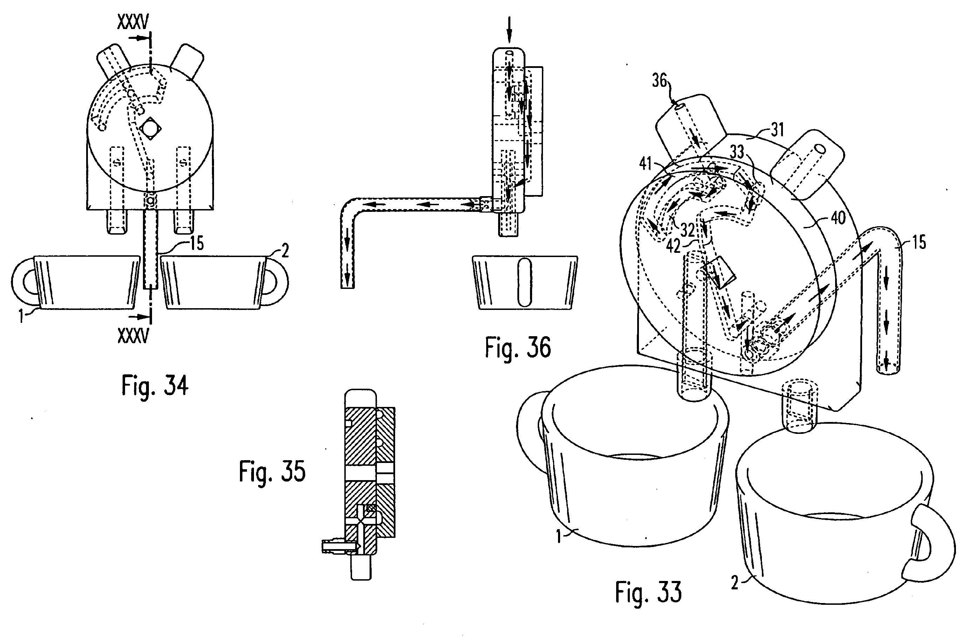

Nachfolgend wird die Funktionsstellung "Spülung Kaffee" (entsprechend der Figur 13) anhand der Figuren 33 bis 36 erläutert.

In dieser Funktionsstellung wird das Ventil 7 geschlossen und das Ventil 13 geöffnet, so daß die Zusatzfluidzufuhr 10 über die erste Zusatzleitung 11 und die Getränkeleitung 9 mit dem ersten Zulauf 36 im Auslaufblock 31 in Verbindung steht. Vom ersten Zulauf 36 strömt die Reinigungsflüssigkeit durch den ersten Kanal 32 im Auslaufblock 31 in das eine Ende des ersten Kanals 41 in der ersten Bahnscheibe 40, durch diese hindurch und aus deren zweiten Ende in den zweiten Kanal 33 im Auslaufblock 31 und von diesem wiederum in das erste Ende des zweiten Kanals 42 in der ersten Bahnscheibe 40 und durch deren zweites Ende hinaus in die Abführleitung 15 bzw. die dazugehörigen Bohrungen im Auslaufblock 31. Auf diese Weise werden somit sämtliche bei der Abgabe von Kaffee mit diesem in Berührung kommenden Kanäle mit Reinigungsflüssigkeit gespült.

Die Steuerung 3 ist hierbei so ausgebildet, daß nach jeder Getränkeabgabe (z. B. Figur 11 oder Figur 12) eine Reinigung (Figur 13; Figur 33 bis 36) der entsprechenden Kanäle stattfindet, bevor eine neue Getränkeabgabe erfolgt.
In der zur Funktion "Spülung Milch" gehörigen Funktion gemäß Figuren 16 und 37 bis 40 werden in analoger Weise die vorher (Figuren 14 oder 15) von Milch durchflossenen Kanäle gespült. Bei geschlossenem Ventil 8 und geöffnetem Ventil 14 strömt somit die Reinigungsflüssigkeit in den zweiten Zulauf 37, von dort in das eine Ende des Kanals 34 im Auslaufblock 31, aus dessen anderem Ende in das eine Ende des ersten Kanals 51 in der zweiten Bahnscheibe 50, aus deren zweiten Ende über den vierten Kanal 35 im Auslaufblock 31 in das erste Ende des zweiten Kanals 52 in der zweiten Bahnscheibe 50 und durch dessen zweites Ende in die Bohrungen der Abführleitung 15, um dann verworfen zu werden. Auch hier werden also wieder alle zuvor (siehe Figuren 14 und 21 bis 24 bzw. Figuren 15 und 29 bis 32) von Milch durchflossenen Kanäle nunmehr von der Reinigungsflüssigkeit durchströmt.

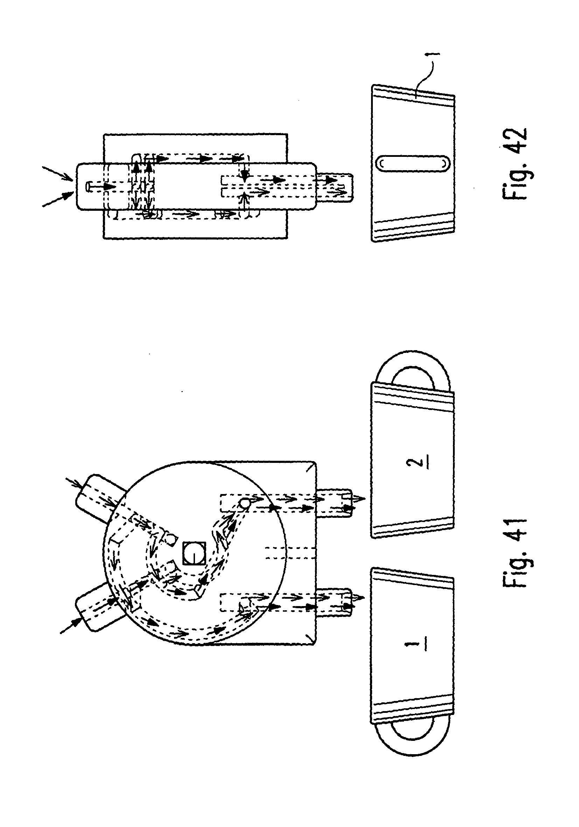

In den Figuren 41 und 42 ist schließlich gezeigt, wie die Bahnscheiben 40 und 50 verstellt bzw. die Kanäle angeordnet werden, um gleichzeitig Kaffee und Milch in Gefäße 1, 2 zu füllen. Die Positionen entsprechen hier der Kombination aus den Positionen der Figuren 11 und 14 bzw. 17 bis 20 und 21 bis 24 mit dem Unterschied, daß dem ersten Zulauf 36 Kaffee und gleichzeitig dem zweiten Zulauf 37 Milch durch Öffnung der Ventile 7 und 8 (bei geschlossenen Ventilen 13 und 14) zugeführt werden. Der dazugehörige Spülvorgang entspricht einer Kombination der zuvor gezeigten Spülvorgänge gemäß Figuren 13 und 16 bzw. 33 bis 36 und 37 bis 40.

Aus obigem geht hervor, daß bei der hier gezeigten Ausführungsform die beiden Bahnscheiben 40 und 50 starr miteinander verbunden sein können. Selbstverständlich ist es auch möglich, die beiden Bahnscheiben 40 und 50 getrennt voneinander zu steuern, so daß auch andere Ventil-Wege bzw. -Kanäle in den Bahnscheiben vorgesehen sein können.

Neben dem Spülvorgang nach jedem Getränkeabgabevorgang (oder nach einer größeren Gruppe von Abgabevorgängen), bei welchem alle zuvor von Getränken durchflossenen Kanäle sozusagen ohne tote Zonen gespült werden, ist es auch möglich, die Anordnung mit recht wenigen Handgriffen vollständig auseinanderzunehmen, um an die nach außen offenen Kanäle zu kommen. Dies ist jedoch im allgemeinen nicht notwendig, da die Spülung alle von Lebensmitteln durchflossenen Bereiche erfaßt.

### Bezugszeichenliste

- 1: Geschirr
- 2: Geschirr
- 3: Steuerung
- 4: Tastatur
- 5: 1. Zuführeinrichtung
- 6: 2. Zuführeinrichtung
- 7: 1. Ventil
- 8: 2. Ventil
- 9: Getränkeleitung
- 10: Zusatzfluidzufuhr
- 11: 1. Zusatzleitung
- 12: 2. Zusatzleitung
- 13: 1. Zusatzventil
- 14: 2. Zusatzventil
- 15: Abführleitung
- 20, 20': Fülleinrichtung
- 21: 1. Strömungskanal
- 22: 2. Strömungskanal
- 24: Motor
- 25: Welle
- 26: Ventilhalter
- 27: Gestell
- 28: Hubantrieb
- 30: Ventileinrichtung
- 31: Auslaufblock
- 32: 1. Kanal
- 33: 2. Kanal
- 34: 3. Kanal
- 35: 4. Kanal
- 36: 1. Zulauf
- 37: 2. Zulauf
- 40: 1. Bahnscheibe
- 41: 1. Kanal
- 42: 2. Kanal
- 50: 2. Bahnscheibe
- 51: 1. Kanal
- 52: 2. Kanal

## Patentansprüche

1. Abgabevorrichtung für Getränke oder dergleichen dosierbare fluide Lebensmittel, insbesondere Kaffee und/oder Milch oder dergleichen Heißgetränke, umfassend
- Zuführeinrichtung (5, 6) zum Zuführen von mindestens zwei verschiedenen Heißgetränken;
- Fülleinrichtung (20, 20') zum Abfüllen der Heißgetränke in mindestens ein Geschirr (1, 2);
- Ventileinrichtung (30) zum Sperren und Freigeben von Getränkeleitungen (9) zwischen den Zuführeinrichtungen (5, 6) und den Fülleinrichtungen (20, 20'), wobei die Ventileinrichtungen (30) derart ausgebildet sind, dass Zusatzleitungen (11, 12, 15) zum Zuführen und/oder Abführen von Spülmitteln zum Säubern, Heißwasser oder Dampf zum Vorwärmen oder dergleichen Zusatzfluiden an Stelle der Getränkele.itungen (9) an die Ventileinrichtungen (30) zur Behandlung der Ventileinrichtungen (30) in von den Heißgetränken durchflossenen Bereichen anschließbar sind,
**dadurch gekennzeichnet, dass**
die Ventileinrichtungen (30) mindestens einen motorisch bewegbaren Schieber (40, 50) mit mindestens zwei darin befindlichen Kanälen (41, 42; 51, 52) umfassen, von denen jeder in einer ersten Position mindestens einer bestimmten Betriebsart zum Abgeben des Heißgetränks zugeordnet und in einer zweiten Position mit den Zusatzleitungen (11, 12) verbunden ist.

2. Abgabevorrichtung nach Anspruch 1,
**dadurch gekennzeichnet, dass**
der Schieber (40, 50) als drehbare Bahnscheibe ausgebildet ist.

3. Abgabevorrichtung nach einem der Ansprüche 1 oder 2,
**dadurch gekennzeichnet, dass**
die Fülleinrichtungen (20, 20') direkt am Schieber (40, 50) anschließend angebracht sind.

4. Abgabevorrichtung nach einem der vorangegangenen Ansprüche,
**dadurch gekennzeichnet, dass**
zwei oder mehr Schieber (40, 50) vorgesehen und mit Kanälen (41, 42; 51, 52) derart versehen sind, dass zwei oder mehr Heißgetränke wahlweise gleichzeitig oder nacheinander derselben Fülleinrichtung (20, 20') zuführbar sind.

5. Abgabevorrichtung nach einem der vorhergehenden Ansprüche,
**dadurch gekennzeichnet, dass**
die Fülleinrichtungen (20, 20') mit mindestens zwei derart getrennten Strömungskanälen (21, 22) versehen sind, dass die durch die getrennten Strömungskanäle (21, 22) fließenden Heißgetränke erst nach Verlassen der Fülleinrichtungen (20, 20') und im Wesentlichen im Geschirr (1, 2) vermischt werden.

6. Abgabevorrichtung nach einem der vorangegangenen Ansprüche,
**dadurch gekennzeichnet, dass**
die Kanäle (41, 42; 51, 52) derart miteinander verbindbar sind, dass mehrere Kanäle (41, 42; 51, 52) gleichzeitig von Zusatzfluid durchströmbar sind.

7. Abgabevorrichtung nach einem der vorhergehenden Ansprüche,
**dadurch gekennzeichnet, dass**
eine einzige Zusatzleitung (15) zum Abführen von Zusatzfluid vorgesehen ist, das Zusatzfluid durch die Getränkeleitungen (9) zuführbar und die Getränkeleitungen (9) in Strömungsrichtung direkt vor Einströmöffnungen für das Zusatzfluid absperrbar sind.

8. Abgabevorrichtung nach einem der vorhergehenden Ansprüche,
**dadurch gekennzeichnet, dass**
Steuereinrichtungen (3) vorgesehen und derart ausgebildet sind, dass nach einem Getränkeabfüllvorgang ein Spülvorgang durchführbar ist.

9. Abgabevorrichtung nach einem der vorhergehenden Ansprüche,
**dadurch gekennzeichnet, dass**
in die Ventileinrichtungen (30) eine Aufschäumvorrichtung zum Aufschäumen insbesondere von Milch mittels Dampf und/oder Luft integriert ist.

## Claims

1. Dispensing device for drinks or the like liquid foodstuffs which can be dispensed in metered quantities, in particular coffee and/or milk or the like hot drinks, comprising
- supply means (5, 6) for supplying at least two different hot drinks;
- filling means (20, 20') for dispensing the hot drinks into at least one container;
- valve means (30) for shutting off and opening drink pipes (9) between the supply means (5, 6) and the filling means (20, 20'), wherein the valve means (30) are constructed in such a way that additional pipelines (11, 12, 15) for supplying and/or removing flushing agents for cleaning, hot water or steam for pre-warming or the like additional fluids can be connected instead of the drink pipes (9) to the valve means (30) for treatment of the valve means (30) in regions through which the hot drinks flow, **characterised in that** the valve means (30) comprise at least one sliding element (40, 50) which is movable by a motor with at least two channels (41, 42; 51, 52) located therein, each of which in a first position is assigned to at least one specific mode of operation for dispensing the hot drink and in a second position is connected to the additional pipes (11, 12).

2. Dispensing device as claimed in Claim 1, **characterised** at the sliding element (40, 50) is constructed as a rotary disc.

3. Dispensing device as claimed in any one of Claims 1 or 2, **characterised in that** the filling means (20, 20') are mounted directly adjoining the sliding element (40, 50).

4. Dispensing device as claimed in any one of the preceding claims, **characterised in that** it has two or more sliding elements (40, 50) and is provided with channels (41, 42; 51, 52) in such a way that two or more hot drinks can be selectively supplied to the same filling means (20, 20') simultaneously or in succession.

5. Dispensing device as claimed in any one of the preceding claims, **characterised in that** the filling means (20, 20') are provided with at least two flow channels (21, 22) in such a way that the hot drinks flowing through the separated flow channels (21, 22) are not mixed until after they have left the filling means (20, 20') and are substantially in the container (1, 2).

6. Dispensing device as claimed in any one of the preceding claims, **characterised in that** the channels (41, 42; 5, 52) can be connected to one another in such a way that the additional fluid can flow simultaneously through a plurality of channels (41, 42; 51, 52).

7. Dispensing device as claimed in any one of the preceding claims, **characterised in that** one single additional pipe (15) is provided for removing additional fluid, the additional fluid can be supplied through the drink pipes (9) and the drink pipes (9) can be shut off directly in front of inflow openings for the additional fluid in the flow direction.

8. Dispensing device as claimed in any one of the preceding claims, **characterised in that** control means (3) are provided and are constructed in such a way that after a drink dispensing process is completed a flushing process can be carried out.

9. Dispensing device as claimed in any one of the preceding claims, **characterised in that** a foaming device for producing foam by means of steam and/or air is integrated into the valve means (30).

## Revendications

1. Dispositif de distribution de boissons ou de produits alimentaires fluides dosables de ce genre, en particulier de café et/ou de lait ou de boissons chaudes similaires, comprenant
- un dispositif d'alimentation (5, 6) servant à amener au moins deux boissons chaudes différentes ;
- un dispositif de remplissage (20, 20') servant à remplir les boissons chaudes dans au moins un récipient (1,2);
- un dispositif à soupape (30) permettant de fermer et d'ouvrir des conduites de boissons (9) entre les dispositifs d'alimentation (5, 6) et les dispositifs de remplissage (20, 20'), les dispositifs à soupape (30) étant conçus de telle sorte que des conduites supplémentaires (11, 12, 15) permettant d'amener et/ou d'évacuer des produits de rinçage destinés au nettoyage, de l'eau chaude ou de la vapeur servant au préchauffage ou des fluides supplémentaires de ce genre peuvent être raccordés aux dispositifs à soupape (30) à la place des conduites de boissons (9) pour traiter les dispositifs à soupape (30) dans les zones traversées par les boissons chaudes,
**caractérisé en ce que**
les dispositifs à soupape (30) comprennent au moins un robinet-vanne (40, 50) pouvant être déplacé par moteur doté d'au moins deux canaux (41, 42 ; 51, 52) se trouvant à l'intérieur, dont chacun est associé dans une première position à au moins un mode de fonctionnement donné pour distribuer la boisson chaude et est relié dans une deuxième position aux conduites supplémentaires (11, 12).

2. Dispositif de distribution selon la revendication 1,
**caractérisé en ce que**
le robinet-vanne (40, 50) est réalisé comme un disque rotatif.

3. Dispositif de distribution selon l'une quelconque des revendications 1 ou 2,
**caractérisé en ce que**
les dispositifs de remplissage (20, 20') sont raccordés directement au robinet-vanne (40, 50).

4. Dispositif de distribution selon l'une quelconque des revendications précédentes,
**caractérisé en ce que**
deux ou plusieurs robinets-vannes (40, 50) sont prévus et munis de canaux (41, 42 ; 51, 52) de telle sorte que deux ou plusieurs boissons chaudes peuvent être amenées au choix en même temps ou l'une après l'autre au même dispositif de remplissage (20, 20').

5. Dispositif de distribution selon l'une quelconque des revendications précédentes,
**caractérisé en ce que**
les dispositifs de remplissage (20, 20') sont munis d'au moins deux canaux d'écoulement (21, 22) séparés de telle sorte que les boissons chaudes s'écoulant à travers les canaux d'écoulement séparés (21, 22) ne sont mélangées qu'après avoir quitté les dispositifs de remplissage (20, 20') et essentiellement dans le récipient (1,2).

6. Dispositif de distribution selon l'une quelconque des revendications précédentes,
**caractérisé en ce que**,
les canaux (41, 42 ; 51, 52) peuvent être reliés les uns aux autres, de telle sorte que plusieurs canaux (41, 42 ; 51, 52) peuvent être traversés en même temps par du fluide supplémentaire.

7. Dispositif de distribution selon l'une quelconque des revendications précédentes,
**caractérisé en ce qu'**
une seule conduite supplémentaire (15) destinée à transporter le fluide supplémentaire est prévue, **en ce que** le fluide supplémentaire peut être amené à travers les conduites de boissons (9) et **en ce que** les conduites de boissons (9) peuvent être fermées dans le sens de l'écoulement, directement avant des ouvertures d'admission du fluide supplémentaire.

8. Dispositif de distribution selon l'une quelconque des revendications précédentes,
**caractérisé en ce que**
des dispositifs de commande (3) sont prévus et configurés de telle sorte qu'un rinçage peut être réalisé après un soutirage de boisson.

9. Dispositif de distribution selon l'une quelconque des revendications précédentes,
**caractérisé en ce qu'**
un dispositif de moussage permettant de faire mousser en particulier du lait au moyen de vapeur et/ou d'air est intégré dans les dispositifs à soupape (30).
